# EUROPÄISCHE PATENTSCHRIFT

(11) **EP 1 649 311 B1**
(45) Veröffentlichungstag und Bekanntmachung des Hinweises auf die Patenterteilung: **30.01.2008**
(21) Anmeldenummer: 04766303.4
(22) Anmeldetag: 23.07.2004
(51) Int. Cl.: G02B 6/10

(54) **STRAHLVERFOLGUNG IN UNSTETIGEN MULTIMODALEN KANALWELLENLEITERN**
RAY TRACING IN DISCONTINUOUS MULTIMODE CHANNEL WAVEGUIDES
POURSUITE DE FAISCEAU DANS DES GUIDES D'ONDES A CANAL MULTIMODAUX DISCONTINUS

(30) Priorität: 25.07.2003 DE 10334107
(43) Veröffentlichungstag der Anmeldung: 26.04.2006
(73) Patentinhaber: SIEMENS AKTIENGESELLSCHAFT, 80333 München (DE)
(72) Erfinder: BIERHOFF, Thomas, 34471 Volkmarsen (DE)
(86) Internationale Anmeldenummer: PCT/EP2004/051590
(87) Internationale Veröffentlichungsnummer: WO 2005/010579

(56) Entgegenhaltungen:
- WO-A-02/33455
- E. GRIESE ET AL: "Time domain simulation of optical multimode chip-to-chip interconnects" PROCEEDINGS OF SPIE, Bd. 4455, Dezember 2001 (2001-12), Seiten 131-142, XP002304825
- E. CZECH: "Spatial distribution of luminance of light emitted by optical fibers" PROCEEDINGS OF SPIE, Bd. 5064, April 2003 (2003-04), Seiten 222-229, XP002304826
- BIERHOFF T ET AL: "RAY TRACING TECHNIQUE AND ITS VERIFICATION FOR THE ANALYSIS OF HIGHLY MULTIMODE OPTICAL WAVEGUIDES WITH ROUGH SURFACES" IEEE TRANSACTIONS ON MAGNETICS, IEEE INC. NEW YORK, US, Bd. 37, Nr. 5, PART 1, 4. Juni 2000 (2000-06-04), Seiten 3307-3310, XP001089831 ISSN: 0018-9464
- BIERHOFF T ET AL: "AN APPROACH TO MODEL WAVE PROPAGATION IN HIGHLY MULTIMODE OPTICAL WAVEGUIDES WITH ROUGH SURFACES" INTERNATIONAL SYMPOSIUM ON THEORETICAL ELECTRICAL ENGINEERING, XX, XX, 6. September 1999 (1999-09-06), Seiten 515-520, XP008005522

## Beschreibung

Die Erfindung betrifft die Strahlverfolgung in hoch multimodalen Kanalwellenleitern.

Zur Berechnung der Strahlausbreitung in dielektrischen Kanalwellenleitern, insbesondere Lichtleitern, stehen bislang wellenoptische Analysemethoden wie die Methode der finiten Element (FEM) oder die 'Beam Propagation Method' (BPM) zur Verfügung. Diese sind jedoch nur dann effizient einsetzbar, wenn nur eine oder wenige Moden zu berücksichtigen sind und der Querschnitt der Wellenleiter, bezogen auf die optische Wellenlänge, nicht allzu groß ist.

Für multimodale Stufenindex-Wellenleiter, bei denen der Querschnitt wesentlich größer als die Wellenlänge der verwendeten Strahlung ist, sind hingegen Strahlverfolgungen auf der Basis geometrischer Optik effizient möglich.

Hierbei wird (in der Simulation) ein einzelner Strahl vorgegebener Richtung und Polarisation in den Wellenleiter eingekoppelt. Dieser tritt entweder direkt am Ende des Wellenleiters aus oder wird an der Wand des optischen Kanals, d.h. der Wandfläche des Indexsprungs, reflektiert. Diese Simulation wird für eine Vielzahl von in den Wellenleiter eintretenden Strahlen unterschiedlicher Richtung durchgeführt. Ein Beispiel dieser Art ist in der Patentschrift DE 10051405 C2 zu finden.

Dabei besteht ein Problem darin, den jeweiligen Reflektionspunkt zu bestimmen. Für einfache geometrische Formen, insbesondere Quader, ist dies leicht möglich, da der Schnittpunkt einer Geraden mit einer Ebene leicht analytisch berechenbar ist. Dies wird für die den Seitenflächen des Quaders entsprechenden Ebenen durchgeführt und derjenige Punkt verwendet, der auf der Quaderoberfläche liegt. Damit sind dann jedoch nur Wellenleiter mit rechteckigem Querschnitt berechenbar. Dieses Verfahren ist immer dann möglich, wenn ein konvexer Körper mit analytisch beschreibbarer Oberfläche vorliegt. Bei einem gekrümmten Wellenleiter ist dies jedoch nicht mehr der Fall.

Um gekrümmter Wellenleiter mit anderen Querschnitten einer rechnerischen Bestimmung zugänglich zu machen, wird der Wellenleiter als Extrusion der Querschnittsfläche modelliert, wie beispielsweise in dem Artikel von Th. Bierhoff und A. Himmler, "Modeling of Board-integrated step index waveguides for advanced ray tracing analysis", Proc. Optics in Computing Technologies, Paderborn 2001, S.37-43. Der Querschnitt ist dabei konvex; die Extrusion längs einer gekrümmten Trajektorie jedoch ist nicht mehr konvex.

In der Praxis reicht selbst diese Methode nicht aus. Insbesondere bei der Kopplung zweier Wellenleiter durch ein Vergussmaterial entsteht ein komplexes Volumen, das auf die genannt Art nicht mehr handhabbar ist. Gleiches gilt für die Ankopplungspunkte von Wellenleitern. Hierbei entstehen insbesondere konkave Bereiche mit innenliegenden Kanten.

Aufgabe der Erfindung ist es, ein Verfahren anzugeben, mit dem der Strahlverlauf in Wellenleitern mit komplexen Raumvolumina bestimmt werden kann.

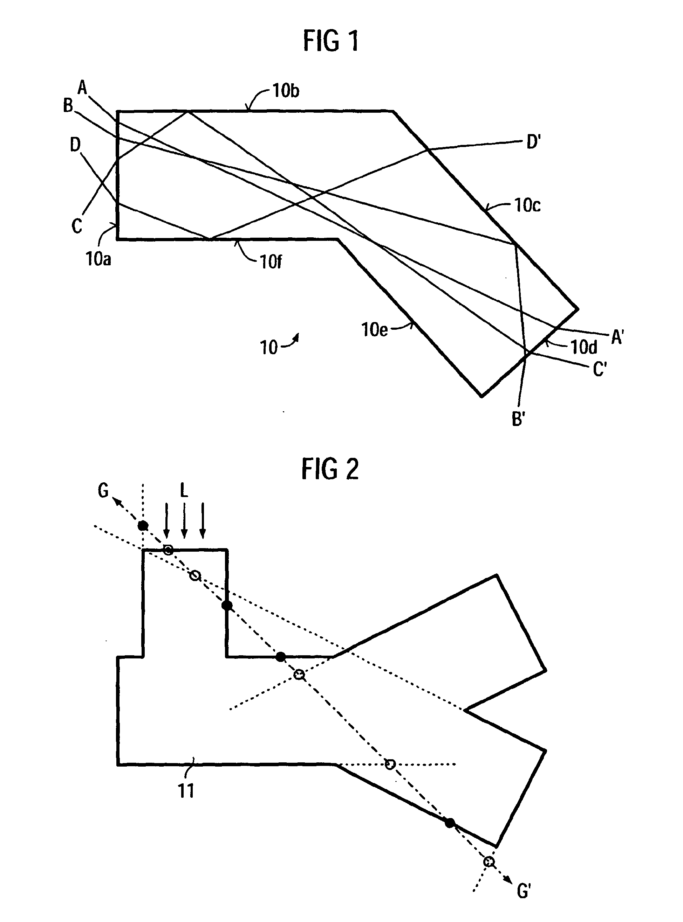

In Fig. 1 ist ein Längsschnitt für einen solchen Fall dargestellt. Der Lichtleiter 10 ist gewinkelt und beispielsweise im senkrecht zur Zeichenebene stehende Querschnitt rechteckig. Die Wandflächen 10a und 10d sind die Ein- bzw. Austrittsflächen, an denen überwiegend Brechung beim Ein- oder Austritt der Strahlen erfolgt. An den Wandflächen 10b, 10c, 10e und 10f soll die Reflektion der Strahlen überwiegen, um eine Wellenführung zu erzielen. Einige der möglichen Strahlverläufe sind durch die Strahlengänge A, B, C und D dargestellt. In der Zeichnung sind die Brechungen beim Eintritt und Austritt jeweils angedeutet.

Strahl A wird nicht reflektiert; er verläuft vollständig im Innern des Lichtleiters 10, ohne eine der Wandflächen zu berühren. Strahl B wird nur im rechten Teil an der Wandfläche 10c reflektiert. Strahl C wird nur im linken Teil an der Wandfläche 10b reflektiert. Strahl D wird zunächst im linken Teil von der Wandfläche 10f reflektiert und trifft dann im rechten Teil auf die Wandfläche 10c. Da der Einfallswinkel steil ist, findet keine Totalreflexion statt; der Strahl verlässt den Lichtleiter als Verlust.

Fig. 2 zeigt einen Längsschnitt durch einen Lichtleiter 11 mit innenliegenden Kanten und daher lokal-konkaven Bereichen. Es soll der Übersichtlichkeit halber angenommen werden, dass die senkrecht zur Zeichenebene stehenden Querschnitte rechteckig seien. Die Struktur nach Fig. 2 kann dann einfach durch Angabe der sechsundzwanzig Eckpunkte im Raum definiert werden. Der Wellenleiter hat dreizehn rechteckige Wandflächen, die senkrecht zur Zeichenebene in Fig. 2 stehen, und zwei dem sichtbaren Querschnitt entsprechende. Letztere sind nicht nur keine Rechtecke, sondern auch nicht konvex. Es ergeben sich vierzehn Ebenen im Raum, auf denen die Wandflächen liegen. Das oben aufgeführte Extrusionsverfahren ist aus zwei Gründen nicht anwendbar: Dieses betrachtet Lichtstrahlen, die in etwa der Trajektorie folgen, und setzt konvexe Querschnitte voraus.

Eine Lösung nach der Strahlverfolgungsmethode verwendet eine Gerade im Raum, auf der der Beginn des Strahles liegt. Diese ist in Fig. 2 durch die Linie G-G' dargestellt, wobei der Beginn des Lichtstrahls umrandet ist. Sodann werden die Schnittpunkte dieser Geraden mit allen fünfzehn Ebenen bestimmt; im Beispiel sind einige dieser Punkte markiert. Falls der Strahl nicht zufällig parallel zu einer Ebene verläuft, ergibt das dreizehn Schnittpunkte mit den Ebenen der Wandflächen. Von jedem der Schnittpunkte wird festgestellt, ob er auf einer der Wandflächen liegt. Für die rechteckigen Seitenflächen ist das relativ einfach; für die nicht konvexen Deckflächen ist das bereits nicht mehr trivial. Diese Schnittpunkte liegen alle auf der Geraden G-G', die den Lichtstahl repräsentiert. Sodann wird bestimmt, welcher dieser Punkte auf einer der Wandflächen liegt. Damit entfallen die nicht ausgefüllten (und die nicht dargestellten weiteren) Punkte. Es verbleiben die mit ausgefüllten Kreisen markierten vier Punkten, von denen, im Beispiel umrandet, einer der Ausgangspunkt ist. Der (in der vorgegebene Richtung) nächstliegende Punkt ist der Schnittpunkt des Lichtstrahls, für den nunmehr Reflexion oder Austritt mit Brechung bestimmt werden kann und der Ausgangspunkt für die erneute Anwendung des Verfahrens ist.

Abgesehen von dem mit der Anzahl der Flächen steigenden Aufwand der Berechnung ist zwar der Schnittpunkt mit der Deckel- oder Bodenebene leicht zu finden; jedoch ist die Bestimmung aufwendig, ob dieser Punkt sich innerhalb des komplexen Polygons befindet, das die Deck- und Bodenfläche umrandet.

Die Erfindung löst die Aufgabe, einen Austrittspunkt zu bestimmen, indem sie auf die explizite Beschreibung der tatsächlichen Wandflächen verzichtet. Der Lichtleiter wird als räumliche Vereinigung von zwei oder mehr Teilstücken gleichen Kernmaterials dargestellt. Durch die Verwendung einfacher Grundmodelle, in der Regel Quader, wird eine einfache Modellierung möglich. Beispielsweise sind für Quader die Schnittpunkte einer den Lichtstrahl repräsentierende Geraden effizient bestimmbar. Im Gegensatz zu dem zuvor dargestellten Verfahren werden die im Innern liegenden Schnittpunkte nicht dadurch bestimmt, ob sie auf einer realen Wandfläche liegen; statt dessen wird ermittelt, ob ein Medienübergang vorliegt.

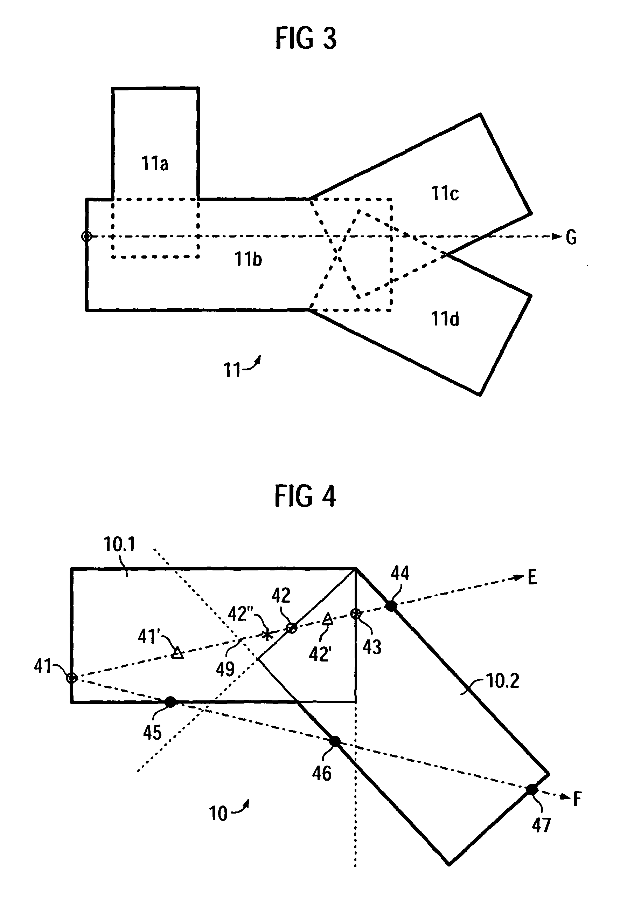

In Fig. 3 ist, wiederum im Längsschnitt, dargestellt, wie sich der Lichtleiter 11 als räumliche Vereinigung von vier Teilstücken 11a, 11b, 11c und 11d darstellt, die der Übersichtlichkeit halber in diesem Beispiel rechteckige oder kreisförmige Längsschnitte haben könnten. Im einfachsten Fall handelt es sich daher um Quader oder Zylinder; im allgemeinen jedoch um die oben erwähnten Extrusionen.

Es handelt sich somit um ein Verfahren zur Bestimmung des Übertragungsverhaltens eines Lichtleiters mit Stufenindexprofil, bei dem der Lichtleiter aus ineinander eintauchenden Leitstücken mit gleichem Kernmaterial zusammengesetzt gedacht wird, so dass die Oberflächen dieser Leitstücke aus realen, außerhalb liegenden, und virtuellen, innerhalb eines anderen Leitstücks liegenden Oberflächen besteht. Das Übertragungsverhalten wird mit geometrischer Strahlverfolgung bestimmt, indem die Schnittpunkte eines Strahls mit den Oberflächen der Leitstücke bestimmt wird, die aus diesem Grunde analytisch definiert sind, insbesondere durch Extrusion von Querschnitten entlang einer Axialtrajektorie. Ein iteratives Vorgehen erlaubt es, einen realen Materialübergang zu bestimmen.

Zur Erläuterung des Verfahrens wird die in Fig. 1 verwendete einfachere Form eines Lichtleiters 10 in Fig. 4 als aus zwei Leitstücken 10.1 und 10.2 mit gleichem Kernmaterial vereinigt gezeigt.

Der Strahl E beginnt am Ausgangspunkt 41 (oder trifft hier aus der Umgebung auf). Es werden nunmehr die Schnittpunkte des Strahls E (d.h. der zugehörigen Geraden) mit den Teilstücken berechnet. Andere Schnittpunkte mit den Verlängerungen der Oberflächen, wie der nicht weiter markierte Schnittpunkt 49, entfallen bereits bei der Berechnung der Schnittpunkte mit dem Teilstück 10.2. Es ergeben sich je zwei Punkte 41 und 44 sowie 42 und 43. Punkt 41 ist der Ausgangspunkt. Der nächstliegende Punkt ist Punkt 42, der jedoch im Innern des Lichtleiters liegt, also nicht der gesuchte Austrittspunkt 44 ist.

Die Erfindung benutzt die Erkenntnis, dass der Punkt 42 kein Austrittspunkt ist bzw. an dieser Stelle keine Brechung stattfindet, weil die Materialien zu beiden Seiten des Punktes 42 (optisch) gleich sind.

Um herauszufinden, ob die Materialien an beiden Seiten gleich sind, stellt die Erfindung verschiedene Ausführungsformen und Varianten bereit.

Für die bevorzugte Ausführungsform wird ausgenutzt, dass für die Berechnung von Brechung bzw. Reflexion ohnehin die Flächennormale an dem Eintrittspunkt bestimmt werden muss. Es muss lediglich bei der geometrischen Modellierung darauf geachtet werden, dass diese Flächennormale systematisch immer nach außen (oder immer nach innen) zeigt; dies ist bei Verwendung der üblichen Verfahren zur 3D-Modellierung der Fall. Dann wird für den Punkt 42 der Winkel zwischen dem Strahl E und der Flächennormale von Teilstück 10.2 berechnet. Liegt dieser im ersten oder vierten Quadranten, liegt beispielsweise ein Strahl-Eintritt in das Teilstück 10.2, sonst ein Strahl-Austritt vor.

Nachdem auf diese Art bestimmt wurde, ob ein Strahl-Ein- oder Austritt vorlag, wird ein dem Teilstück 10.2 zugeordneter Zähler um eins erhöht bzw. erniedrigt. Jedem Teilstück ist ein solcher Zähler zugeordnet. Da der Ursprung ein Eintrittspunkt in das Teilstück 10.1 ist, ist dessen Zähler mit Eins vorbelegt. Nunmehr sind beide Zähler nicht Null, so dass der Strahl sich noch im Innern befindet.

Bei Punkt 43 wird auf dieselbe Art ein Strahl-Austritt aus Teilstück 10.1 festgestellt, dessen Zähler vermindert und damit Null wird. Da jedoch der Zähler von Teilstück 10.2 noch ungleich Null ist, ist Punkt 43 kein Randpunkt.

Bei Punkt 44 wird ein Strahl-Austritt aus Teilstück 10.2 ermittelt und dessen Zähler vermindert. Nunmehr sind alle Zähler Null; damit liegt ein realer Austritt aus dem modellierten Lichtleiter vor.

Die Zähler für die Teilstücke müssen immer dann mehr als ein Bit umfassen, wenn die Teilstücke nicht konvex sind, weil dann ein Stahl mehrfach ein- und austreten könnte.

Anstelle von Zählern kann auch eine Liste der Teilstücke mitgeführt werden; beim Eintritt wird das Teilstück hinzugefügt, beim Austritt ein (beliebiger) Eintrag für das betreffende Teilstück entfernt. Der Austrittspunkt ist erreicht, wenn die Liste leer ist. Auch auf diese Art kann ermittelt werden, ob ein Schnittpunkt erreicht ist, bei dem für jeden Eintritt in ein Teilstück auch ein Austritt aufgetreten ist.

Dabei sind die Zähler bzw. die Liste passend zum Ursprung vorzubesetzen. Im allgemeinen Fall werden die Leitstücke bestimmt, in denen sich der Ursprung befindet, und entsprechend die Zähler für diese Leitstücke auf eins gesetzt bzw. die Leitstücke in die Liste eingetragen. Liegt der Ursprung außerhalb, ist der erste Punkt in Strahlrichtung immer ein realer Eintrittspunkt; dieser Fall muss ggf. vorab behandelt werden. Im laufenden Verfahren liegt der Ursprungspunkt immer auf einer realen Außenwand eines bestimmten Leitstücks; hier muss lediglich der Zähler für dieses Leitstück gesetzt bzw. dieses Leitstück in die Liste eingetragen werden. Lediglich im allgemeinen Fall, in dem der Ursprung im Innern des Lichtleiters befindet, sind alle passenden Leitstücke zu ermitteln.

Im übrigen ist der letzte Punkt 44 immer ein Austrittspunkt; diese Tatsache kann wahlweise zur Optimierung oder Plausibilitätsprüfung verwendet werden.

In Fig. 3 ist zum Vergleich der Strahl G eingezeichnet. Hier ergibt sich folgender Ablauf: "Eintritt 11a", "Austritt 11a", "Eintritt 11c", "Eintritt 11d", "Austritt 11b", "Austritt 11d", "Austritt 11c" und beim letzten Punkt gleichzeitig "Austritt 11c".

Die zweite Ausführungsform benötigt eine Methode, um für einen beliebigen Punkt festzustellen, ob er im Innern mindestens eines Teilstücks liegt. Eine einfache Lösung für einen Quader besteht darin, die Entfernungen des fraglichen Punktes zu den Ebenen der Seitenflächen zu bestimmen. Diese Abstände müssen jeweils kleiner sein als der Abstand der Seitenfläche zur gegenüberliegenden Seitenfläche.

Bei der ersten Variante dieser zweiten Ausführungsform wird ein Punkt 41' zwischen Punkt 41 und Punkt 42 bestimmt, am einfachsten als Mittelpunkt. Dieser Punkt wird daraufhin untersucht, ob er im Inneren mindestens eines Teilstücks liegt. Das gleiche erfolgt mit dem Punkt 42' zwischen Punkt 42 und dem nächsten Punkt 43. Sind beide Punkte im Innern mindestes eines Teilstücks, so liegt kein Materialübergang vor; der Punkt 42 ist ein innerer Punkt. Bei Anwendung auf Punkt 43 übernimmt der Punkt 42' die Rolle des bisherigen Punktes 41', so dass nur für den nächsten Mittelpunkt zwischen 43 und 44 bestimmt werden muss, ob er im Innern eines Teilstücks liegt. Bei Punkt 44 erübrigt sich dieser Test, da kein weiterer Punkt vorhanden ist und damit Punkt 44 immer ein Austrittspunkt ist. Da weiterhin auf Grund der Berechnungen von Punkt 41 bekannt ist, dass hier ein Strahl-Eintritt vorlag, kann diese Information anstelle einer tatsächlichen Untersuchung von Punkt 41' dienen. Im Beispiel ist es also für den Punkt 42 nur notwendig, zu bestimmen, ob Punkt 42' im Inneren mindestens eines Teilstücks liegt. Entsprechend ist für Punkt 43 nur ein Punkt auf der nachfolgenden Strecke zu untersuchen.

Am Beispiel des Strahles F in Fig. 4 ergibt sich, dass der Punkt 45 realer Austrittspunkt ist, weil er das Teilstück 10.1 verlässt und damit der Zähler für Teilstück 10.1 Null wird bzw. die Liste der Teilstücke leer geworden ist.

Bei einer anderen Variante ist es nicht notwendig, vorab alle Schnittpunkte mit den Oberflächen der Teilstücke zu bestimmen und diese dann sortiert zu verarbeiten. Vielmehr wird einerseits mit Hilfe der Flächennormalen bestimmt, in welcher Richtung des Strahls sich das Material des Teilstücks befindet. Bei einem Eintritt ist das in Strahlrichtung, bei einem Austritt entgegen der Strahlrichtung. Im Beispiel von Punkt 42 in Fig. 4 liegt ein Eintritt vor; damit befindet sich das Material des aktuellen Teilstücks in Strahlrichtung. Nunmehr wird entgegen dieser Richtung ein Punkt 42" benutzt, der um einen vorgegebenen geringen Abstand ε von der Oberfläche entfernt ist. Der Abstand ε wird möglichst klein, aber so gewählt, dass Rundungsfehler bei der folgenden Berechung noch keine Rolle spielen. Von diesem Punkt wird nunmehr ermittelt, ob er sich im Inneren eines der anderen Teilstücke befindet. Ist das der Fall, liegt kein Materialwechsel vor; das Verfahren wird mit dem nächsten Teilstück fortgesetzt. Ist das nicht der Fall, ist ein Austrittspunkt gefunden. Die Reihenfolge, nach der die Teilstücke verprobt werden, wird zweckmäßig so gestaltet werden, dass mit denen begonnen wird, die zuletzt eine Koinzidenz angezeigt haben ('least recently u-sed', LRU Strategie).

Die bevorzugte Variante dieser Ausführungsform bestimmt zunächst alle Schnittpunkte des Probestrahls mit den Oberflächen der Teilstücke, sortiert diese nach Abstand und prüft diese dann in der damit gegebenen Reihenfolge. Dabei wird überprüft, ob der Schnittpunkt zusätzlich im Innern eines weiteren Teilstücks liegt. Ist das der Fall, z.B. für die Punkte 42 und 43 in Fig. 4, dann liegt kein Materialübergang vor. Ist das nicht der Fall, z.B. für die Punkte 45, 46 und 44 in Fig. 4, dann liegt ein Materialübergang vor. Hier ist der Sonderfall von Punkten, die zu mehreren Oberflächen von Teilstücken gehören, einfach handhabbar. Bei adäquater Ausführung entsteht bei der Sortierung für jeden Punkt zugleich eine Liste der Teilstücke, zu denen dieser Punkt gehört; diese Liste enthält im oben vorausgesetzten Normalfall keiner Koinzidenzen nur ein Element. Es werden nur die Teilstücke überprüft, die nicht in der Liste enthalten sind; hier liegt der Punkt entweder vollständig im Innern oder außerhalb.

Diese Ausführungsform mit ihren Varianten kann vorteilhaft sein, wenn die Bestimmung, ob sich ein Punkt im Innern eines Teilstücks befindet, rechnerisch nicht aufwendiger ist als die Bestimmung des Schnittpunkts eines Strahls mit der Oberfläche eines Teilstücks.

Ein Strahl kann theoretisch statt auf eine Fläche auch auf eine Kante oder Ecke treffen. Dies ist jedoch ein bekanntes Problem der Strahlverfolgung, das in der Regel ignoriert werden kann, solange die verwendeten Formeln keine Singularitäten aufweisen. Dies betrifft auch die Fälle, in denen mehr als zwei Seitenflächen der Teilstücke zusammenfallen. Falls die Seitenflächen nicht koplanar sind, handelt es sich um eine virtuelle Kante oder Ecke, die in gleicher Weise wie eine reale Kante praktisch ohne Bedeutung ist. Bleibt der Fall, dass zwei Seitenflächen in derselben Ebene liegen und zumindest abschnittsweise gleich sind. In der Praxis wird dieser Fall selten eintreten und vom Modellierer intuitiv vermieden. Gegebenenfalls kann eine Warnung ausgegeben und der Benutzer zu Änderung des Modells aufgefordert werden. Eine einfache Lösung besteht darin, die beiden fraglichen Punkte für die Dauer der Berechnung um den Betrag der ohnehin vorzusehenden numerischen Genauigkeitsschranke in entgegengesetzte Richtung zu verschieben und mit den geänderten Punkten weiterzurechnen.

Um diese Problemen von vornherein zu vermeiden, erfolgt bevorzugt die Zerlegung des Lichtwellenleiters derart, dass die Teilstücke keine gemeinsamen Oberflächen haben.

## Patentansprüche

1. Verfahren zur Bestimmung des Übertragungsverhaltens eines Lichtleiters mittels Strahlverfolgung, mit folgenden Merkmalen:
- die räumliche Darstellung des Lichtleiters erfolgt als räumlichen Vereinigung von zwei oder mehr Leitstücken mit einer analytisch darstellbaren Oberfläche, für die jeweils ein analytisches Verfahren zur Ermittlung der Schnittpunkte einer Raumgeraden mit der Oberfläche gegeben ist;
- das Übertragungsverhalten wird durch Strahlverfolgung von Probestrahlen bestimmt, indem für jeweils einen Probestrahl solange Schnittpunkte des Probestrahls mit den Oberflächen der Leitstücke ermittelt werden, bis ein Schnittpunkt gefunden ist, zu dem ein realer Materialübergang gehört.

2. Verfahren nach Anspruch 1, wobei die Bestimmung, ob ein realer Materialübergang vorliegt, folgendermaßen erfolgt:
- zunächst werden alle Schnittpunkte des Probestrahls mit den Oberflächen aller Leitstücke bestimmt;
- diese Schnittpunkte werden in Strahlrichtung aufsteigend sortiert und in dieser Reihenfolge, vom Ursprung ausgehend, untersucht;
- befindet sich der Ursprung außerhalb des Lichtleiters, ist der erste gefundene Schnittpunkt einer mit realem Materialübergang;
- andernfalls wird mittels des Winkels zwischen Flächennormale der Oberfläche des zugehörigen Leiterstücks und Strahlrichtung bestimmt, ob ein Ein- oder Austritt in das Leitstück vorliegt;
- ein realer Materialübergang liegt vor, wenn ein Schnittpunkt erreicht ist, bei dem für jeden Eintritt in ein Teilstück auch ein Austritt aufgetreten ist, wobei entsprechend der Lage des Ursprungs anfänglich vorgegebene Eintritte gesetzt sind.

3. Verfahren nach Anspruch 1, wobei die Bestimmung, ob ein realer Materialübergang vorliegt, folgendermaßen erfolgt:
- zunächst werden alle Schnittpunkte des Probestrahls mit den Oberflächen aller Leitstücke bestimmt;
- diese Schnittpunkte werden in Strahlrichtung aufsteigend sortiert und in dieser Reihenfolge, vom Ursprung ausgehend, untersucht;
- befindet sich der Ursprung außerhalb des Lichtleiters, ist der erste gefundene Schnittpunkt einer mit realem Materialübergang;
- andernfalls wird für jeden Schnittpunkt je ein weiterer Probepunkt in Strahlrichtung und entgegen Strahlrichtung daraufhin untersucht, ob er im Innern eines der Teilstücke liegt; ist das Ergebnis für beide Probepunkte unterschiedlich, liegt ein Materialübergang vor.

4. Verfahren nach Anspruch 1, wobei die Bestimmung, ob ein realer Materialübergang vorliegt, folgendermaßen erfolgt:
- für die Leitstücke werden nacheinander Schnittpunkte des Probestrahls mit der Oberfläche des Leitstücks bestimmt und mit den nachfolgenden Schritten untersucht;
- für jeden Schnittpunkt wird je ein Probepunkt in und entgegen Strahlrichtung mit einem kleinen vorgegebene Abstand vom Schnittpunkt bestimmt;
- jeder dieser Probepunkte wird daraufhin untersucht, ob er im Innern eines der Teilstücke liegt; ist das Ergebnis für beide Probepunkte unterschiedlich, liegt ein Materialübergang vor.

5. Verfahren nach Anspruch 3 mit folgender Modifikation:
- mittels der Flächennormalen wird bestimmt, in welcher Richtung ein Austritt aus dem Teilstück vorliegt und ein Probepunkt in dieser Richtung ermittelt; liegt er nicht innerhalb eines anderen Leitstücks, so liegt ein Materialübergang vor.

6. Verfahren nach Anspruch 1, wobei die Bestimmung, ob ein realer Materialübergang vorliegt, folgendermaßen erfolgt:
- zunächst werden alle Schnittpunkte des Probestrahls mit den Oberflächen aller Leitstücke bestimmt;
- diese Schnittpunkte werden in Strahlrichtung aufsteigend sortiert und in dieser Reihenfolge, vom Ursprung ausgehend, untersucht;
- für jeden Schnittpunkt wird bestimmt, ob er im Innern eines der anderen Teilstücke liegt; ist das nicht der Fall, liegt ein Materialübergang vor.

## Claims

1. Method for establishing the transmission behaviour of an optical waveguide by way of ray tracing, comprising the following features:
- the spatial representation of the optical waveguide is carried out as spatial union of two or more guide pieces with an analytically representable surface, for each of which an analytical method for the determination of the intersection points of a straight line behaviour with the surface is given;
- the transmission behaviour is determined by ray tracing of the sample rays, in which for each sample ray intersection points of the sample ray with the surfaces of the guide pieces are determined until an intersection point is found, which corresponds to a physical material transition.

2. Method according to Claim 1, in which the determination of whether a physical material transition is present is conducted as follows:
- first, all intersection points of the sample ray with the surfaces of all guide pieces are determined;
- these intersection points are sorted in ascending order in the ray direction and are examined once, starting from the origin;
- if the origin is located outside the optical waveguide, the first intersection point found is one with a physical material transition;
- otherwise, it is determined whether an entry into or exit from the guide piece is present by means of the angle between the surface normal to the surface of the associated guide piece and the ray direction; and
- a physical material transition is present if an intersection point is reached at which for every entry into a part an exit has also taken place, in which, according to the location of the source, initially prescribed entries have been set.

3. Method according to Claim 1, in which the determination of whether a physical material transition is present is conducted as follows:
- first, all intersection points of the sample ray with the surfaces of all guide pieces are determined;
- these intersections are sorted in ascending order in the ray direction and are examined in this sequence, starting from the origin;
- if the origin is located outside the optical waveguide, the first intersection point found is one with a physical material transition;
- otherwise, one further sample point each is thereupon examined in the ray direction and against the ray direction for each intersection point as to whether it lies inside one of the segments; if the result is different for the two sample points, a material transition is present.

4. Method according to Claim 1, in which the determination of whether a physical material transition is present is conducted as follows:
- one after another, intersection points of the sample ray with the surface of the guide piece are determined for the guide pieces and are examined according to the following steps;
- for every intersection point, one sample point each is determined with a small, prescribed distance from the intersection point in and against the ray direction;
- each of these sample points is examined thereupon as to whether it lies inside one of the segments; if the result is different for the two sample points, a material transition is present.

5. Method according to Claim 3, with the following modification:
- by means of the surface normal it is determined in which direction an exit from the segment is present, and a sample point in this direction is determined; if it does not lie inside a different guide piece, a material transition is present.

6. Method according to Claim 1, in which the determination of whether a physical material transition is present is conducted as follows:
- first, all intersection points of the sample ray with the surfaces of all guide pieces are determined;
- these intersection points are sorted in ascending order in the ray direction and are examined, starting from the origin;
- it is determined for every intersection point whether it lies in the interior of one of the other segments; if this is not the case, a material transition is present.

## Revendications

1. Procédé de détermination des caractéristiques de transmission d'un guide d'ondes lumineuses au moyen d'une poursuite de faisceau, ayant les caractéristiques suivantes :
- on effectue la représentation spatiale du guide d'ondes lumineuses sous la forme d'une réunion spatiale de deux ou plus tronçons de guidage avec une surface analytiquement représentable pour laquelle il existe à chaque fois un procédé analytique destiné à déterminer les points d'intersection d'une droite spatiale avec la surface ;
- on détermine les caractéristiques de transmission au moyen d'une poursuite de faisceaux échantillons en déterminant pour chaque faisceau échantillon des points d'intersection du faisceau échantillon avec les surfaces des tronçons de guidage jusqu'à trouver un point d'intersection auquel appartient une transition matérielle réelle.

2. Procédé selon la revendication 1, la détermination du fait qu'il existe ou non une transition matérielle réelle s'effectuant de la manière suivante :
- on détermine d'abord tous les points d'intersection du faisceau échantillon avec les surfaces de tous les tronçons de guidage;
- on trie ces points d'intersection suivant un ordre croissant correspondant au sens du faisceau et on les examine dans cet ordre en partant de l'origine ;
- si l'origine se trouve en dehors du guide d'ondes lumineuses, le premier point d'intersection trouvé est un point avec une transition matérielle réelle;
- sinon, on détermine au moyen de l'angle entre la normale à la surface du tronçon de guidage associé et la direction de faisceau s'il existe une entrée ou une sortie dans le tronçon de guidage;
- il existe une transition matérielle réelle si on a atteint un point d'intersection pour lequel une sortie est aussi apparue pour chaque entrée dans un tronçon, des entrées initialement prescrites en fonction de la position de l'origine étant posées.

3. Procédé selon la revendication 1, la détermination du fait qu'il existe ou non une transition matérielle réelle s'effectuant de la manière suivante :
- on détermine d'abord tous les points d'intersection du faisceau échantillon avec les surfaces de tous les tronçons de guidage;
- on trie ces points d'intersection suivant un ordre croissant correspondant au sens du faisceau et on les examine dans cet ordre en partant de l'origine ;
- si l'origine se trouve en dehors du guide d'ondes lumineuses, le premier point d'intersection trouvé est un point avec une transition matérielle réelle;
- sinon, on examine pour chaque point d'intersection un autre point échantillon dans le sens du faisceau et dans le sens contraire pour savoir s'il se trouve à l'intérieur de l'un des tronçons; si le résultat pour les deux points échantillons est différent, il existe une transition matérielle.

4. Procédé selon la revendication 1, la détermination du fait qu'il existe ou non une transition matérielle réelle s'effectuant de la manière suivante :
- pour les tronçons de guidage, on détermine successivement des points d'intersection du faisceau échantillon avec la surface du tronçon de guidage et on les examine avec les étapes suivantes ;
- pour chaque point d'intersection, on détermine un point échantillon dans le sens du faisceau et dans le sens contraire avec une petite distance prescrite par rapport au point d'intersection ;
- on examine chacun de ces points échantillons pour savoir s'il se trouve à l'intérieur de l'un des tronçons ; si le résultat pour les deux points échantillons est différent, il existe une transition matérielle.

5. Procédé selon la revendication 3 avec la modification suivante :
- au moyen des normales aux surfaces, on détermine dans quel sens une sortie du tronçon a lieu et on détermine un point échantillon dans ce sens ; s'il ne se trouve pas à l'intérieur d'un autre tronçon de guidage, il existe une transition matérielle.

6. Procédé selon la revendication 1, la détermination du fait qu'il existe ou non une transition matérielle réelle s'effectuant de la manière suivante :
- on détermine d'abord tous les points d'intersection du faisceau échantillon avec les surfaces de tous les tronçons de guidage ;
- on trie ces points d'intersection suivant un ordre croissant correspondant au sens du faisceau et on les examine dans cet ordre en partant de l'origine ;
- pour chaque point d'intersection, on détermine s'il se trouve à l'intérieur de l'un des autres tronçons ; si ce n'est pas le cas, il existe une transition matérielle.
